# EUROPEAN PATENT SPECIFICATION

(11) **EP 3 747 948 B1**
(45) Date of publication and mention of the grant of the patent: **03.01.2024**
(21) Application number: 18903267.5
(22) Date of filing: 14.12.2018
(51) Int. Cl.: C08L 75/04, C08L 75/08, C08G 18/48, C08G 18/78, C08K 5/544, C08G 18/73, C08G 18/75, C08K 5/00, C08K 5/49, C08G 18/28, C08G 18/72, C08G 18/76, C08G 18/79

(54) **POLYURETHANE RESIN COMPOSITION**
POLYURETHANHARZZUSAMMENSETZUNG
COMPOSITION DE RÉSINE DE POLYURÉTHANE

(30) Priority: 30.01.2018 KR 20180011508
(43) Date of publication of application: 09.12.2020
(73) Proprietor: KCC Corporation, Seoul 06608 (KR)
(72) Inventor: KIM, Byong Su, Ulsan 44536 (KR); LEE, Jae Young, Ulsan 44459 (KR); KWON, Jin Wook, Ulsan 44261 (KR)
(74) Representative: Cabinet Laurent & Charras
(86) International application number: PCT/KR2018/015958
(87) International publication number: WO 2019/151640

(56) References cited:
- KR-A- 20030 057 384
- KR-A- 20090 026 572
- KR-A- 20110 009 641
- KR-A- 20110 022 001
- KR-B1- 100 285 097
- US-A1- 2003 144 412

## Description

### TECHNICAL FIELD

The present invention relates to a 1-component polyurethane resin composition used as an adhesive.

### BACKGROUND ART

In general, a polyurethane resin has a urethane bond in the molecules thereof, and is excellent in abrasion resistance, oil resistance, solvent resistance, and the like, and is used in various fields such as adhesives, injection molding, ink, paint, and foam.

Examples of cases in which such a polyurethane resin is used as an adhesive may include cases of bonding a substrate such as glass on a painted surface of an automobile body. However, a typical polyurethane resin has poor adhesiveness to a painted surface of an automobile body, and thus, a primer is first applied on the painted surface and then a polyurethane resin is applied thereon, followed by adhering a substrate such as glass thereto. Since a primer application process is essentially required as described above, when a typical polyurethane resin is used, there is a problem in that a process of adhering a substrate such as glass on a painted surface of an automobile body becomes complicated.

In addition, a typical polyurethane resin has short pot life, so that the workability thereof is poor, and the adhesiveness thereof at low temperatures is also poor, so that there is a problem in that an environment in which the polyurethane resin is used is limited.

### [Prior Art Document]

Korean Patent Laid-open Publication No. 2009-0019798

### DISCLOSURE OF THE INVENTION

### TECHNICAL PROBLEM

An aspect of the present invention provides a polyurethane resin composition which is excellent in adhesiveness in a wide temperature range, capable of securing sufficient pot life, and has an excellent effect adhesiveness to a glass surface as well as a painted surface of an automobile body without a primer when used as an adhesive.

### TECHNICAL SOLUTION

According to an aspect of the present invention, there is provided a polyurethane resin composition including a first urethane resin, a second urethane resin obtained by reacting polyether polyol, an aminoalkoxy silane-based compound, aliphatic polyisocyanate, and a biuret body bonded with isocyanate, and a plasticizer.

### ADVANTAGEOUS EFFECTS

A polyurethane resin composition of the present invention is excellent in adhesiveness in a wide temperature range (for example, 5°C to 35°C), and also excellent in workability since sufficient pot life is secured. Particularly, when the polyurethane resin composition of the present invention is used as an adhesive for adhering a substrate such as glass to a painted surface of an automobile body, an excellent adhesive effect may be achieved without applying a primer on a glass surface as well as the painted surface of the automobile body.

### BRIEF DESCRIPTION OF THE DRAWINGS

The following drawing attached herein illustrates a preferred embodiment of the present invention by example, and serves to enable technical concepts of the present invention to be further understood together with detailed description of the invention given below, and therefore the present invention should not be interpreted only with matters in such a drawing.

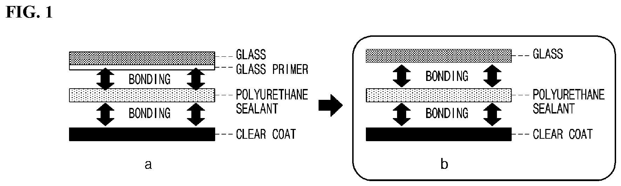

a and b of FIG. 1 respectively show an example of using a typical polyurethane resin composition as a polyurethane sealant and an example of using a polyurethane resin composition according to an embodiment of the present invention as a polyurethane sealant.

### BEST MODE FOR CARRYING OUT THE INVENTION

Hereinafter, the present invention will be described.

The present invention relates to a 1-component polyurethane resin composition including a specific urethane resin, thereby having an excellent adhesive effect without applying an additional primer on a glass surface as well as a painted surface of an automobile body. The polyurethane resin composition of the present invention includes a first urethane resin, a second urethane resin, and a plasticizer. A detailed description thereof is as follows.

### <First urethane resin>

The first urethane resin included in the polyurethane resin composition according to an embodiment of the present invention may be a urethane prepolymer obtained by a reaction of a polyol compound and a polyisocyanate compound.

Specific examples of the polyol compound may be one or more selected from the group consisting of polyethylene glycol, polypropylene glycol, polytetramethylene glycol, and polypropylene triol. The weight average molecular weight (Mw) of the polyol compound may be 500 to 10,000 g/mol, specifically 2,000 to 5,000 g/mol.

Specific examples of the polyisocyanate compound may be 2,4-toluene diisocyanate (2,4-TDI), 2,6-toluene diisocyanate (2,6-TDI), 4,4'-diphenylmethylene diisocyanate (4,4'-MDI), 2,4'-diphenylmethylene diisocyanate (2,4'-MDI), 1,4-phenylene diisocyanate, 1,5-naphthalene diisocyanate, ethylene diisocyanate, propylene diisocyanate, tetramethylene diisocyanate, hexamethylene diisocyanate, isophorone diisocyanate, or the like.

In the reaction of a polyol compound and a polyisocyanate compound, a plasticizer (a first plasticizer) may be used. Specific examples of the plasticizer may be dioctyl phthalate, dibutyl phthalate, dioctyl adipate, diisodecyl phthalate, diisononyl phthalate, or a mixture thereof.

The weight average molecular weight (Mw) of the first urethane resin may be 2,500 to 15,000 g/mol considering the viscosity, flexibility, and the like of the polyurethane resin composition.

In addition, the content of the first urethane resin may be 35 to 70 parts by weight based on 100 parts by weight of the polyurethane resin composition. When the content of the first urethane resin is out of the above range, the flexibility, adhesiveness, heat resistance, and the like of the polyurethane resin composition may be deteriorated.

### <Second urethane resin>

The second urethane resin included in the polyurethane resin composition according to an embodiment of the present invention is obtained by reacting polyether polyol, an aminoalkoxy silane-based compound, aliphatic polyisocyanate, and a biuret body bonded with isocyanate.

The biuret body bonded with isocyanate may mean a self-condensation product in which an isocyanate monomer is self-condensed to have a biuret bond.

The polyether polyol promotes the hydrolysis of the aminoalkoxy silane-based compound, and reacts with the biuret body to form a urethane bond. Specific examples of the polyether polyol may include one or more selected from the group consisting of polyethylene glycol, polypropylene glycol, polybutylene glycol, and polytetramethylene glycol. In addition, the weight average molecular weight of the polyether polyol may be 200 to 2,000 g/mol, and the viscosity thereof may be 100 cPs or less when measured at 25°C using a Brookfield Viscometer.

The aminoalkoxy silane-based compound improves the adhesiveness, low-temperature reactivity, and the like of the second urethane resin. The aminoalkoxy silane-based compound may include one or more selected from the group consisting of bis(trialkoxysilylpropyl)amine, N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, N-phenyl-3-aminopropyltrimethoxysilane, N-phenyl-gamma-aminopropyltrimethoxySilane, and 3-aminopropyltriethoxysilane. More specifically, the aminoalkoxy silane-based compound may include bis(trialkoxysilylpropyl)amine, for example, one or more selected from the group consisting of bis(trimethoxysilylpropyl)amine, bis(triethoxysilylpropyl)amine and bis(tripropoxysilylpropyl)amine. In this case, the adhesiveness may be significantly improved compared to other silane-based compounds.

In addition, according to an embodiment of the present invention, the content of the aminoalkoxy silane-based compound may be 0.5 to 3 parts by weight based on 100 parts by weight of the polyurethane resin composition. When the content of the aminoalkoxy silane-based compound is in the above range, the adhesion and low-temperature reactivity of the urethane resin may be further improved.

The aliphatic polyisocyanate improves the adhesion, reactivity, and crosslinking of the second urethane resin. The aliphatic polyisocyanate may be a compound represented by Formula 1 below: 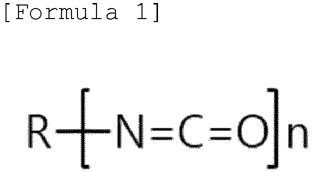 R is a substituted or unsubstituted C₁₋₂₀ aliphatic hydrocarbon, a substituted or unsubstituted C₆₋₂₀ aromatic hydrocarbon, a substituted or unsubstituted C₃₋₂₀ aliphatic hydrocarbon ring, or a combination thereof, the aliphatic hydrocarbon and the aliphatic hydrocarbon ring include or does not include a nitrogen atom, further includes or does not include a ketone group or an ether group, and n is an integer of 1 to 4.

Specifically, the compound of Formula 1 above may include one or more selected from the group consisting of ethyl isocyanate, propyl isocyanate, butyl isocyanate, pentyl isocyanate, hexyl isocyanate, heptyl isocyanate, octyl isocyanate, nonyl isocyanate, decyl isocyanate, undecyl isocyanate, dodecyl isocyanate, tridecyl isocyanate, tetradecyl isocyanate, pentadecyl isocyanate, hexadecyl isocyanate , heptadecyl isocyanate, octadecyl isocyanate, dimethylene diisocyanate, trimethylene diisocyanate, tetramethylene diisocyanate, pentamethylene diisocyanate, hexamethylene diisocyanate, heptamethylene diisocyanate, octamethylene diisocyanate, nonamethylene diisocyanate, decamethylene diisocyanate, undecamethylene diisocyanate, dodecamethylene diisocyanate, tridecamethylene diisocyanate, tetradecamethylene diisocyanate, pentadecamethylene diisocyanate, hexadecamethylene diisocyanate, heptadecamethylene diisocyanate, octadecamethylene diisocyanate, 1,2-phenylene diisocyanate, 1,3-phenylene diisocyanate, 1,4-phenylene diisocyanate, o-xylylene diisocyanate, m-xylylene diisocyanate, p-xylylene diisocyanate, 2,4-toluene diisocyanate, 2,5-toluene diisocyanate, 2,6-toluene diisocyanate, poly(hexamethylene diisocyanate), isophorone disisocyanate, 2-isocyanatoethyl methacrylate, trans-1,4-cyclohexylene diisocyanate, 3,3'-dimethoxy-4,4'-biphenylene diisocyanate, 1,3-bis(1-isocyanato-1-methylethyl)benzene, 3,3'-dimethyldiphenylmethane-4,4'-diisocyanate, 4,4'-methylenebis (phenyl isocyanate) and 2,4,6-trioxotriazine-1,3,5(2H,4H ,6H)-triyl)tris(hexamethylene)isocyanate. More specifically, the compound may be 2,4,6-trioxotriazine-1,3,5(2H,4H,6H)-triyl)tris(hexamethylene)isocyanate.

According to an embodiment of the present invention, the viscosity of the aliphatic polyisocyanate may be 2,250 to 3,750 cPs when measured at 25°C using a Brookfield Viscometer, and the content of the monomer may be 0.15 wt% or less. The content rate (NCO weight%) of the isocyanate group included in the aliphatic polyisocyanate may be 15 to 30 wt%, specifically 21.5 to 22.1 wt%.

According to an embodiment of the present invention, the content of the aliphatic polyisocyanate may be 0.1 to 8 parts by weight based on 100 parts by weight of the polyurethane resin composition. When the content of the aliphatic polyisocyanate is in the above range, the adhesion, reactivity, and crosslinking of the urethane resin may be further improved.

The biuret body bonded with isocyanate improves the adhesiveness, crosslinking reactivity, and the like of the second urethane resin. The isocyanate bonded to the biuret body may include one or more selected from the group consisting of hexamethylene diisocyanate, cyclopentylene-1,3-diisocyanate, cyclohexylene-1,2-diisocyanate, hexahydrolylene diisocyanate, dicyclohexyl-4,4-diisocyanate, 1-methyl-2,4-diisocyanatocyclohexane, 1-methyl-2,6-diisocyanatocyclohexane, bis(4-isocyanatocyclohexyl)methane, 1,4-diisocyanatocyclohexane, and 1,3-diisocyanatocyclohexane.

Specifically, the biuret body bonded with isocyanate may be 1,3,5-Tris(6-isocyanatohexyl)biuret and the like. The content rate (NCO weight%) of the isocyanate group included in the biuret body bonded with isocyanate may be 15 to 30 wt%.

According to an embodiment of the present invention, the content of the biuret body bonded with isocyanate may be 2 to 8 parts by weight based on 100 parts by weight of the polyurethane resin composition. When the content of the biuret body bonded with isocyanate is in the above range, the adhesion, reactivity, and crosslinking of the urethane resin may be further improved.

In order to obtain the second urethane resin, the polyether polyol, the aminoalkoxy silane-based compound, the aliphatic polyisocyanate, and the biuret body bonded with isocyanate may be reacted, based on 1 part by weight of the polyether polyol, at a weight ratio of 0.5 to 1.5 parts by weight of the aminoalkoxy silane-based compound, 0.5 to 4.5 parts by weight of the aliphatic polyisocyanate, and 3 to 10 parts by weight of the biuret body bonded with isocyanate. According to an embodiment of the present invention, when the ratio satisfies the above range, the adhesiveness effect desired by the present invention may be maximized.

The weight average molecular weight of the second urethane resin may be 500 to 2,000 g/mol considering the viscosity, adhesiveness, and the like of the polyurethane resin composition.

In addition, the content of the second urethane resin may be 3 to 14 parts by weight based on 100 parts by weight of the polyurethane resin composition. When the content of the second urethane resin is out of the above range, the adhesiveness (particularly, low-temperature adhesiveness), and the like of the polyurethane resin composition may be deteriorated.

The mixing ratio of the first urethane resin and the second urethane resin may be a weight ratio of 10:1 to 10:3. When the mixing ratio of the first urethane resin and the second urethane resin is out of the above range, the adhesiveness of the polyurethane resin composition may be deteriorated or curing may be delayed, and cracks and the like may be generated on a coating film.

### <Plasticizer>

A plasticizer (second plasticizer) included in the polyurethane resin composition according to an embodiment of the present invention is to impart flexibility, elasticity, and the like to the composition, and may include one or more selected from the group consisting of a phthalate-based plasticizer and a phosphate-based plasticizer. The phthalate-based plasticizer may include one or more selected from the group consisting of di-butyl phthalate, di-2-ethylhexyl phthalate, di-isononyl phthalate, di-isodecyl phthalate, and butylbenzyl phthalate. The phosphate-based plasticizer may include one or more selected from the group consisting of 2-ethylhexyl diphenyl phosphate, tri-cresyl phosphate, and cresyldiphenyl phosphate. At this time, in order to further increase the flexibility and plasticity as well as thermal stability of the polyurethane resin composition, a mixture of diisononyl phthalate and 2-ethylhexyldiphenyl phosphate may be used as the plasticizer.

The content of the plasticizer may be 5 to 20 parts by weight based on 100 parts by weight of the polyurethane resin composition. When the content of the plasticizer is out of the above range, the flexibility, plasticity, and the like of the polyurethane resin composition may be deteriorated.

### <Additional components>

In addition, the polyurethane resin composition of the present invention may further include a diphosphato kappa O-based additive in addition to the plasticizer. For example, bis(2-ethylhexyl)diphosphito kapao, and the like may be included. The polyurethane resin composition including the bis(2-ethylhexyl) diphosphite kapao may further improve physical properties such as adhesion, low-temperature adhesiveness, and shear strength. The content of the bis(2-ethylhexyl)diphosphito kapao may be included in an amount of, for example, 0.01 to 1 part by weight, more specifically 0.05 to 0.2 parts by weight based on 100 parts by weight of the polyurethane resin composition.

In addition, the polyurethane resin composition of the present invention may further include a pigment and a catalyst.

The pigment is to increase the strength of the polyurethane resin composition and impart color thereto. Specific examples thereof may include carbon black, calcium carbonate, titanium dioxide (TiO₂), iron oxide yellow, iron oxide red, and the like. Also, in addition to the pigment, an extender pigment may be included to improve workability, elongation, and the like. Specific examples thereof may include one or more selected from the group consisting of silica, barite (natural barium sulfate), blank fix (synthetic barium sulfate), talc, and calcium carbonate. When the extender pigment is included, low-temperature adhesiveness and adhesion as well as workability and elongation may be further improved. The content of the pigment may be 20 to 40 parts by weight based on 100 parts by weight of the polyurethane resin composition. When the content of the pigment is out of the above range, the strength of the polyurethane resin composition may be deteriorated, or it may be difficult to control the viscosity of the polyurethane resin composition and impart required color.

The catalyst controls the reactivity of the polyurethane resin composition. The catalyst may include one or more selected from the group consisting of dimethyltin dioleate, dibutyltin dimaleate, dibutyltin dilaurate, dibutyltin diacetate, dibutyltin octanoate, dibutyltin mercaptide, dioctyltin dilaurate, dioctyltin mercaptide, dioctyltin dimaleate, 4,4'-(oxydi-2,1-ethanedyl)bismorpholine, and dimethyl-4-morpholine ethaneamine. At this time, in order to optimize the curing reactivity of the polyurethane resin composition to secure sufficient pot life, a mixture of dibutyltin mercaptide, dioctyltin dilaurate, and 4,4'-(oxydi-2,1-ethanedyl)bismorpholine may be used as a catalyst. The content of the catalyst may be 0.001 to 2 parts by weight based on 100 parts by weight of the polyurethane resin composition. When the content of the catalyst is out of the above range, the curing reactivity of the polyurethane resin composition may be deteriorated or the pot life thereof may be shortened to deteriorated workability.

In addition, the polyurethane resin composition of the present invention may further include a thickener commonly used to control the viscosity of a composition.

The polyurethane resin composition of the present invention described above includes the second urethane resin obtained by reacting a specific compound, and thus, is excellent in adhesiveness as well as flexibility, heat resistance, strength, and the like. Particularly, when the polyurethane resin composition according to an embodiment of the present invention is used as an adhesive, a substrate may be directly adhered to a painted surface or a glass surface without applying a primer.

Specifically, a and b of FIG. 1 respectively show an example of using a typical polyurethane resin composition as a polyurethane sealant and an example of using a polyurethane resin composition according to an embodiment of the present invention as a polyurethane sealant. As shown in a of FIG. 1, when a typical polyurethane resin composition is used as a polyurethane sealant, the polyurethane sealant is attached on a clear coat, and then, in order to secure excellent adhesion, a primer is applied on a glass surface to attach the polyurethane sealant. On the other hand, when the polyurethane resin composition according to an embodiment of the present invention is used as a sealant, as shown in b of FIG. 1, the polyurethane sealant may be directly adhered to a painted surface and a glass surface without applying a primer.

As such, when the polyurethane resin composition of the present invention is used as an adhesive for adhering a substrate such as glass to a painted surface of an automobile body, an excellent adhesive effect may be achieved when the substrate is directly adhered to the painted surface as well as a glass surface of the automobile body without the application of a primer.

Hereinafter, the present invention will be described in detail through embodiments.

### [Example 1]

### 1) Preparing first urethane resin

Polypropylene glycol, di-isononyl phthalate, and polypropylene triol were added to a glass flask equipped with a stirrer, a condenser, and a thermometer, and then vacuum decompression was performed for 2 hours while gradually raising the temperature to 140°C. Next, after cooled to 60°C or less, methylene diphenyl di-isocyanate (MDI) was added to the mixture to identify exotherm, and then the mixture was reacted such that the NCO wt% was to be 1.72 wt% while maintaining a temperature of 80 to 90°C. After the completion of the reaction, the mixture was cooled to 40°C to prepare a first urethane resin having a viscosity of 8,400 cPs and a weight average molecular weight of 9,000 g/mol.

### 2) Preparing second urethane resin

Polypropylene glycol was added to a glass flask equipped with a stirrer, a condenser, and a thermometer, and then vacuum decompression was performed for 2 hours while raising the temperature to 140°C. Next, after cooled to 60°C or less, 2,4,6-trioxotriazine-1,3,5(2H,4H,6H)-triyl)tris(hexamethylene)isocyanate (Cas No.3779-63-3) and 1,3,5-tris( 6-isocyanatohexyl) biuret (1,3,5-Tris(6-isocyanatohexyl)biuret) was added to the mixture to identify exotherm, and then the mixture was reacted such that the NCO wt% was to be 14.0 to 15.0 wt% while maintaining a temperature of 100°C. Thereafter, after cooled to 40°C, bis(trimethoxysilylpropyl)amine was added to the mixture, and the mixture was reacted such that the NCO wt% was to be 11.3 wt% while maintaining a temperature of 40 to 45°C. After the completion of the reaction, the mixture was cooled to 40°C to prepare a second urethane resin having a viscosity of 9,800 cPs.

### 3) Preparing polyurethane resin composition

The first urethane resin prepared above, a plasticizer, and an additive were added to a mixer device made of an SUS material and having a vacuum pump connected thereto, having a heatable jacket, and capable of high-viscosity rotational stirring and air-wall scrubbing, and stirring was performed while raising the temperature to 60°C. Next, a pigment was added thereto, and the mixture was stirred for 20 minutes. Thereafter, decompression was performed for 10 minutes to a vacuum of less than 20 Torr to remove moisture. Then, a catalyst and the second urethane resin prepared above were added thereto, and the mixture was stirred for 30 minutes to prepare a polyurethane resin composition having a viscosity of 17,000 Ps and an NCO wt% of 1.8 wt%. At this time, the composition of each component is as shown in Table 1 below.

### [Examples 2 to 8]

A polyurethane resin composition was prepared in the same manner as in Example 1, except that the composition of Table 1 below was applied.

**[Table 1]**

| Composition | | Exam ple 1 | Exam ple 2 | Exam ple 3 | Exam ple 4 | Exam ple 5 | Exam ple 6 | Exam ple 7 | Exam ple 8 |
|---|---|---|---|---|---|---|---|---|---|
| First urethane resin | Polypropylene glycol (Molecular weight (Mw) : 2,000, Viscosity: 150-175 cPs) | 10 | 10 | 10 | 10 | 10 | 10 | 10 | 10 |
| | Diisononyl phthalate | 20 | 20 | 20 | 20 | 20 | 20 | 20 | 20 |
| | Polypropylene triol (Molecular weight (Mw) : 4,800, Viscosity: 850 cPs) | 20 | 20 | 20 | 20 | 24 | 24 | 24 | 24 |
| | Methylene diphenyl diisocyanate( Molecular weight (Mw) : 250, NCO wt%: 33.6 wt%) | 7 | 7 | 7 | 7 | 7 | 7 | 7 | 7 |
| Second urethane resin | Polypropylene glycol (Molecular weight (Mw) : 400, Viscosity: equal to or less than 100 cPs) | 1 | 1 | 1 | 1 | 1 | 1 | 1 | 1 |
| | Bis(trimethox ysilylpropyl) amine | 1 | 1 | 1 | 1 | 1 | 1 | - | - |
| | N-phenyl-gamma-aminopropyltr imethoxy silane | - | - | - | - | - | - | 1 | - |
| | 3-aminopropyl trimethoxy silane | - | - | - | - | - | - | - | 1 |
| | 2,4,6-trioxotriazin e-1,3,5 (2H, 4H, 6 H)triyl)tris( hexamethylene )isocyanate | 4 | 4 | 4 | 4 | 4 | 4 | 1 | 2 |
| | 1,3,5-tris(6-isocyanatohex yl)biuret | 4 | 4 | 4 | 4 | 4 | 4 | 7 | 8 |
| Plasticiz er and additive | Diisononyl phthalate | 4 | 4 | 4 | 4 | - | - | - | - |
| | 2-ethylhexyldip henyl phosphate | 0.5 | 0.6 | 0.5 | 0.5 | 0.5 | 0.5 | 0.5 | 0.5 |
| | bis (2-ethylhexyl)di phosphyto kapao | 0.1 | - | 0.2 | 0.3 | 0.1 | 0.1 | 0.1 | 0.1 |
| Pigment | Carbon black | 28.0 7 | 28.0 7 | 28.0 7 | 28.0 7 | 28.2 7 | 28.1 7 | 28.0 7 | 26.0 7 |
| | Silica | 0.2 | 0.2 | 0.2 | 0.2 | - | 0.1 | 0.2 | 0.2 |
| Catalyst | dioctyltin dilaurate | 0.02 | 0.02 | 0.02 | 0.02 | 0.02 | 0.02 | 0.02 | 0.02 |
| | 4,4'-(oxydi-2,1-ethanedyl) bismorpholine (Amine equivalent: 8.1-8.5) | 0.1 | 0.1 | 0.1 | 0.1 | 0.1 | 0.1 | 0.1 | 0.1 |
| | dibutyltin mercaptide | 0.01 | 0.01 | 0.01 | 0.01 | 0.01 | 0.01 | 0.01 | 0.01 |
| Total (parts by weight) | | 100 | 100 | 100. 1 | 100. 2 | 100 | 100 | 100 | 100 |

### [Comparative Examples 1 to 4]

A polyurethane resin composition was prepared in the same manner as in Example 1, except that the composition of Table 2 below was applied. At this time, the second urethane resin was prepared by applying the composition of Table 2 below.

**[Table 2]**

| Composition | | Compar ative Exampl e 1 | Compar ative Exampl e 2 |
|---|---|---|---|
| First urethane resin | Polypropylene glycol | 10 | 10 |
| | (Molecular weight (Mw): 2,000, Viscosity: 150-175 cPs) | | |
| | diisononyl phthalate | 20 | 20 |
| | Polypropylene triol | 20 | 24 |
| | (Molecular weight (Mw): 4,800, Viscosity: 850 cPs) | | |
| | Methylene diphenyl diisocyanate | 7 | 7 |
| | (Molecular weight (Mw): 250, NCO%: 33.6%) | | |
| Second urethane resin | Polypropylene glycol | 1 | 1 |
| | (Molecular weight (Mw): 400, Viscosity: equal to or less than 100 cPs) | | |
| | bis(trimethoxysilylpropyl)amine | - | - |
| | N-phenyl-gamma-aminopropyltrimethoxy silane | - | - |
| | 3-aminopropyl trimethoxy silane | - | 1 |
| | 3-mercaptopropyl trimethoxysilane | 1 | - |
| | Vinyl trimethoxy silane | - | - |
| | 2,4,6-trioxotriazine-1,3,5(2H,4H,6H)triyl)tris(hexam ethylene) isocyanate | 4.5 | - |
| | 1,3,5-tris(6-isocyanatohexyl)biuret | - | 0.5 |
| Plasticizer | diisononyl phthalate | 8 | 8 |
| | 2-ethylhexyldiphenyl phosphate | 27.57 | 26.57 |
| | bis(2-ethylhexyl)diphosphato kapao | 0.2 | 0.2 |
| Pigment | Carbon black | 27.57 | 26.57 |
| | Silica | 0.2 | 0.2 |
| Catalyst | Dioctyltin dilaurate | 0.02 | 0.02 |
| | 4,4'-(oxydi-2,1-ethanedyl)bismorpholine | 0.1 | 0.1 |
| | (Amine equivalent: 8.1-8.5) | | |
| | Dibutyltin mercaptide | 0.01 | 0.01 |
| Total (parts by weight) | | 99.4 | 98.4 |

### [Experimental Examples]

The physical properties of the polyurethane resin composition prepared in each of Examples 1 to 8 and Comparative Examples 1 and 2 were evaluated as follows, and the results are shown in Tables 3 and 4, respectively.
1. Viscosity: The viscosity was measured using a Brookfield viscometer (Model name: DV2T for high viscosity measurement).
2. Specific gravity: The specific gravity was measured using a 100 cc specific gravity cup.
3. Solids: 1 g of a sample was spread evenly on an aluminum can having a diameter of 5 cm to measure the weight of the sample, and then was baked in a fan oven at 150°C for 15 minutes. The difference in weight between before and after the baking was recorded as a ratio.
4. hardness: The sample was cured for one week to a thickness of 5 mm, and then, the hardness thereof was measured using a Shore A hardness tester.
5. TFT: The prepared sample was applied on a painted surface under the conditions of 20°C × 65% relative humidity and the time for which the sample is not smeared by a non-adhesive tape was measured in a minute unit.
6. Low-temperature adhesiveness: The prepared sample was left to stand for 5 minutes under the predetermined temperature and humidity conditions, and then attached to the painted surface. After being cured for 7 days under the conditions of 20°C × 65% relative humidity, the sample was cut with a knife to identify the adhesiveness to the painted surface, and the area of the sample attached to the painted surface was represented in % (0% if none was attached to the painted surface, and 100% if all was attached to the painted surface).
7. Knife Cut: The prepared sample was attached to the painted surface and then cured for 7 days under the conditions of 20°C × 65% relative humidity. Thereafter, the sample was cut with a knife to identify the adhesiveness to the painted surface, and the area of the sample attached to the painted surface was represented in % (0% if none was attached to the painted surface, and 100% if all was attached to the painted surface).
8. Shear strength: The prepared sample was made into a specimen of a dog-bone shape having a thickness of 5 mm to measure the shear strength of the sample using a Universal Testing Machine (UTM).
9. Pot life: The prepared sample was left to stand for 5 minutes under the predetermined temperature and humidity conditions, and then attached to the painted surface. After being cured for 7 days under the conditions of 20°C × 65% relative humidity, the sample was cut with a knife to identify the adhesiveness to the painted surface, and the area of the sample attached to the painted surface was represented in % (0% if none was attached to the painted surface, and 100% if all was attached to the painted surface).

**[Table 3]**

| Classification | Exampl e 1 | Exampl e 2 | Exampl e 3 | Exampl e 4 | Exampl e 5 | Exampl e 6 |
|---|---|---|---|---|---|---|
| Viscosity | 17,200 | 17,000 | 16, 800 | 17,300 | 17,200 | 17,000 |
| Specific gravity | 1.16 | 1.16 | 1.16 | 1.16 | 1.16 | 1.16 |
| Solids (wt%) | 99 | 99 | 99 | 99 | 99 | 99 |
| Hardness (Hs) | 62 | 62 | 62 | 62 | 62 | 62 |
| TFT (minutes) | 44 | 43 | 42 | 44 | 44 | 42 |
| Low temperature adhesiveness | 90% | 70% | 50% | 70% | 40% | 40% |
| Knife Cut | 100% | 90% | 80% | 80% | 50% | 40% |
| Shear strength (MPa) | 4.5 | 4.1 | 4.7 | 4.7 | 4.5 | 4.6 |

Referring to Table 3, it can be confirmed that the polyurethane resin composition according to the embodiment of the present invention has excellent overall low-temperature adhesiveness and knife cut test results, and secures sufficient pot life.

Specifically, in the case of Example 1, the low-temperature adhesiveness is 90% or greater, and according to the knife cut test result, when the prepared sample was attached to the painted surface, cured for 7 days, and then was cut with a knife, the adhesion to the painted surface of 100% was achieved and the shear strength was 4.5 MPa, exhibiting very excellent physical properties as well as adhesiveness.

In addition, in the case of the polyurethane resin composition of each of Examples 1 and 3 to 6 in which bis(2-ethylhexyl)diphosphite kapao was used as an additive, the shear strength was 4.5 MPa or greater, which is significantly superior to that of the polyurethane resin composition of Example 2 in which bis(2-ethylhexyl)diphosphite kapao was not used. In addition, as the content of bis(2-ethylhexyl)diphosphite kapao was increased, the shear strength was improved, but when 0.2 or more thereof was used, the shear strength was no longer increased.

Meanwhile, in the case of the polyurethane resin compositions of Examples 5 and 6 in which silica was not used as a pigment or 0.1 parts by weight thereof was used, according to the knife cut test result, the adhesiveness to the painted surface was significantly deteriorated compared to the polyurethane resin composition of each of Examples 1 to 4 in which the content of the silica was 0.2 parts by weight or greater. That is, in the case of the polyurethane resin composition of each of Examples 1 to 4 in which the content of the silica was 0.2 parts by weight, according to the knife cut test result, the adhesiveness to the painted surface was significantly improved by more than two times compared to the polyurethane resin composition of each of Examples 5 and 6.

**[Table 4]**

| Classification | Example 1 | Example 7 | Example 8 | Comparat ive Example 1 | Comparat ive Example 2 |
|---|---|---|---|---|---|
| Viscosity | 17,200 | 17,200 | 17,200 | 17,200 | 17,000 |
| Specific gravity | 1.16 | 1.16 | 1.16 | 1.16 | 1.16 |
| Solids (wt%) | 99 | 99 | 99 | 99 | 99 |
| Hardness (Hs) | 62 | 62 | 62 | 62 | 62 |
| TFT (minutes) | 44 | 50 | 52 | 49 | 48 |
| Low temperature adhesiveness | 90% | 30% | 10% | 10% | 20% |
| Knife Cut | 100% | 60% | 40% | 10% | 30% |
| Shear strength (MPa) | 4.5 | 4.5 | 4.1 | 4.2 | 4.4 |

Referring to FIG. 4, the polyurethane resin composition of Example 1 of the present invention is excellent in low-temperature adhesiveness and adhesion according to the knife cut test and also excellent in physical properties such as shear strength compared to the polyurethane resin composition of each of Comparative Examples 1 and 2.

Specifically, compared to the polyurethane resin composition of each of Comparative Examples 1 and 2, the adhesion to the painted surface and low-temperature adhesiveness of the polyurethane resin composition of Example 1 was significantly improved by about 7 to 10 times, when the prepared sample was attached to the painted surface, cured for 7 days, and then was cut with a knife.

In addition, the shear strength of the polyurethane resin composition of Example 1 was improved by 0.1 to 0.3 MPa or more and the TFT thereof was also reduced by 4 to 5 minutes compared to the polyurethane resin compositions of each of Comparative Examples 1 and 2.

## Claims

1. A polyurethane resin composition comprising:
a first urethane resin;
a second urethane resin obtained by reacting polyether polyol, an aminoalkoxy silane-based compound, an aliphatic polyisocyanate, and a biuret body bonded with isocyanate; and
a plasticizer.

2. The polyurethane resin composition of claim 1, wherein the polyether polyol comprises one or more selected from the group consisting of polyethylene glycol, polypropylene glycol, polybutylene glycol, and polytetramethylene glycol.

3. The polyurethane resin composition of claim 1, wherein the aminoalkoxy silane-based compound comprises one or more selected from the group consisting of bis(trialkoxysilylpropyl)amine, N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, N-phenyl-3-aminopropyltrimethoxysilane, N-phenyl-gamma-aminopropyltrimethoxysilane, and 3-Aminopropyltriethoxysilane.

4. The polyurethane resin composition of claim 3, wherein the aminoalkoxy silane-based compound comprises one or more selected from the group consisting of bis(trimethoxysilylpropyl)amine, bis(triethoxysilylpropyl)amine, and bis(tripropoxysilylpropyl)amine.

5. The polyurethane resin composition of claim 1, wherein the aliphatic polyisocyanate is a compound represented by Formula 1 below: 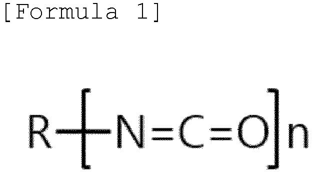 wherein R is a substituted or unsubstituted C₁₋₂₀ aliphatic hydrocarbon, a substituted or unsubstituted C₆₋₂₀ aromatic hydrocarbon, a substituted or unsubstituted C₃₋₂₀ aliphatic hydrocarbon ring, or a combination thereof, the aliphatic hydrocarbon and the aliphatic hydrocarbon ring include or does not include a nitrogen atom, further includes or does not include a ketone group or an ether group, and n is an integer of 1 to 4.

6. The polyurethane resin composition of claim 5, wherein the compound of Formula 1 above comprises one or more selected from the group consisting of ethyl isocyanate, propyl isocyanate, butyl isocyanate, pentyl isocyanate, hexyl isocyanate, heptyl isocyanate, octyl isocyanate, nonyl isocyanate, decyl isocyanate, undecyl isocyanate, dodecyl isocyanate, tridecyl isocyanate, tetradecyl isocyanate, pentadecyl isocyanate, hexadecyl isocyanate , heptadecyl isocyanate, octadecyl isocyanate, dimethylene diisocyanate, trimethylene diisocyanate, tetramethylene diisocyanate, pentamethylene diisocyanate, hexamethylene diisocyanate, heptamethylene diisocyanate, octamethylene diisocyanate, nonamethylene diisocyanate, decamethylene diisocyanate, undecamethylene diisocyanate, dodecamethylene diisocyanate, tridecamethylene diisocyanate, tetradecamethylene diisocyanate, pentadecamethylene diisocyanate, hexadecamethylene diisocyanate, heptadecamethylene diisocyanate, octadecamethylene diisocyanate, 1,2-phenylene diisocyanate, 1,3-phenylene diisocyanate, 1,4-phenylene diisocyanate, o-xylylene diisocyanate, m-xylylene diisocyanate, p-xylylene diisocyanate, 2,4-toluene diisocyanate, 2,5-toluene diisocyanate, 2,6-toluene diisocyanate, poly(hexamethylene diisocyanate), isophorone disisocyanate, 2-isocyanatoethyl methacrylate, trans-1,4-cyclohexylene diisocyanate, 3,3'-dimethoxy-4,4'-biphenylene diisocyanate, 1,3-bis(1-isocyanato-1-methylethyl)benzene, 3,3'-dimethyldiphenylmethane-4,4'-diisocyanate, 4,4'-methylenebis (phenyl isocyanate) and 2,4,6-trioxotriazine-1,3,5(2H,4H ,6H)-triyl)tris(hexamethylene)isocyanate.

7. The polyurethane resin composition of claim 1, wherein the isocyanate bonded to the biuret body comprises one or more selected from the group consisting of hexamethylene diisocyanate, cyclopentylene-1,3-diisocyanate, cyclohexylene-1,2-diisocyanate, hexahydroxylylene diisocyanate, dicyclohexyl-4,4-diisocyanate, 1-methyl-2,4-diisocyanatocyclohexane, 1-methyl-2,6-diisocyanatocyclohexane, bis(4-isocyanatocyclohexyl)methane, 1,4-diisocyanatocyclohexane, and 1,3-diisocyanatocyclohexane.

8. The polyurethane resin composition of claim 1, wherein the second urethane resin is formed by reacting, based on 1 part by weight of the polyether polyol, 0.5 to 1.5 parts by weight of the aminoalkoxy silane-based compound, 0.5 to 4.5 parts by weight of the aliphatic polyisocyanate, and 3 to 10 parts by weight of the biuret body bonded with isocyanate.

9. The polyurethane resin composition of claim 1, wherein the first urethane resin and the second urethane resin are included in a weight ratio of 10:1 to 10:3.

10. The polyurethane resin composition of claim 1, wherein the plasticizer comprises a phthalate-based plasticizer, a phosphate-based plasticizer, or a mixture thereof.

## Patentansprüche

1. Polyurethanharz-Zusammensetzung, die Folgendes umfasst:
ein erstes Urethanharz;
ein zweites Urethanharz, das erhalten wurde, indem Polyetherpolyol, eine Verbindung auf Basis von Aminoalkoxysilan, ein aliphatisches Polyisocyanat und ein Biuret-Körper, welcher an Isocyanat gebunden ist, miteinander umgesetzt wurden; und
einen Weichmacher.

2. Polyurethanharz-Zusammensetzung nach Anspruch 1, wobei das Polyetherpolyol eines oder mehrere umfasst, das/die aus der Gruppe ausgewählt ist/sind, welche aus Polyethylenglykol, Polypropylenglykol, Polybutylenglykol und Polytetramethylenglykol besteht.

3. Polyurethanharz-Zusammensetzung nach Anspruch 1, wobei die Verbindung auf Basis von Aminoalkoxysilan eines oder mehrere umfasst, das/die aus der Gruppe ausgewählt ist/sind, welche aus Aminopropylmethyldimethoxysilan, N-2-(Aminoethyl)-3-aminopropyltrimethoxysilan, 3-Aminopropyltrimethoxysilan, 3-Aminopropyltriethoxysilan, N-Phenyl-3-aminopropyltrimethoxysilan, N-Phenylgamma-aminopropyltrimethoxysilan, und 3-Aminopropyltriethoxysilan besteht.

4. Polyurethanharz-Zusammensetzung nach Anspruch 3, wobei die Verbindung auf Basis von Aminoalkoxysilan eines oder mehrere umfasst, das/die aus der Gruppe ausgewählt ist/sind, welche aus bis-(Trimethoxysilylpropyl)amin, bis-(Triethoxysilylpropyl)amin und bis-(Tripropoxysilylpropyl)amin besteht.

5. Polyurethanharz-Zusammensetzung nach Anspruch 1, wobei es sich bei dem aliphatischen Polyisocyanat um eine Verbindung handelt, welche der Darstellung in der nachstehenden Formel 1 entspricht: 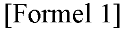 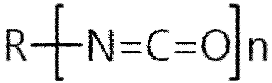 wobei R für einen substituierten oder nicht substituierten aliphatischen C₁-C₂₀-Kohlenwasserstoff, einen substituierten oder nicht substituierten aromatischen C₆-C₂₀-Kohlenwasserstoff, einen substituierten oder nicht substituierten aliphatischen C₃-C₂₀-Kohlenwasserstoffring oder eine Kombination davon steht, wobei der aliphatische Kohlenwasserstoff und der aliphatische Kohlenwasserstoffring ein Stickstoffatom beinhalten oder nicht beinhalten, wobei weiterhin eine Ketongruppe oder eine Ethergruppe enthalten ist oder nicht enthalten ist und n für eine ganze Zahl von 1 bis 4 steht.

6. Polyurethanharz-Zusammensetzung nach Anspruch 5, wobei die Verbindung nach der obigen Formel 1 eines oder mehrere umfasst, das/die aus der Gruppe ausgewählt ist/sind, welche aus Ethylisocyanat, Propylisocyanat, Butylisocyanat, Pentylisocyanat, Hexylisocyanat, Heptylisocyanat, Octylisocyanat, Nonylisocyanat, Decylisocyanat, Undecylisocyanat, Dodecylisocyanat, Tridecylisocyanat, Tetradecylisocyanat, Pentadecylisocyanat, Hexadecylisocyanat, Heptadecylisocyanat, Octadecylisocyanat, Dimethylendiisocyanat, Trimethylendiisocyanat, Tetramethylendiisocyanat, Pentamethylendiisocyanat, Hexamethylendiisocyanat, Heptamethylendiisocyanat, Octamethylendiisocyanat, Nonamethylendiisocyanat, Decamethylendiisocyanat, Undecamethylendiisocyanat, Dodecamethylendiisocyanat, Tridecamethylendiisocyanat, Tetradecamethylendiisocyanat, Pentadecamethylendiisocyanat, Hexadecamethylendiisocyanat, Heptadecamethylendiisocyanat, Octadecamethylendiisocyanat, 1,2-Phenylendiisocyanat, 1,3-Phenylendiisocyanat, 1,4-Phenylendiisocyanat, o-Xylylendiisocyanat, m-Xylylendiisocyanato, p-Xylylendiisocyanat, 2,4-Toluoldiisocyanat, 2,5-Toluoldiisocyanat, 2,6-Toluoldiisocyanat, Poly(hexamethylendiisocyanat), Isophorondisisocyanat, 2-Isocyanatoethylmethacrylat, trans-1,4-Cyclohexylendiisocyanat, 3,3'-Dimethoxy-4,4'-biphenylendiisocyanat, 1,3-bis-(1-isocyanato-1-methylethyl)benzol, 3,3'-Dimethyldiphenylmethan-4,4'-diisocyanat, 4,4'-Methylen-bis-(phenylisocyanat) und 2,4,6-Trioxotriazin-1,3,5(2H,4H,6H)-triyl)-tris-(hexamethylen)isocyanat besteht.

7. Polyurethanharz-Zusammensetzung nach Anspruch 1, wobei das Isocyanat, welches an den Biuret-Körper gebunden ist, eines oder mehrere umfasst, das/die aus der Gruppe ausgewählt ist sind, welche aus Hexamethylendiisocyanat, Cyclopentylen-1,3-diisocyanat, Cyclohexylen-1,2-diisocyanat, HexahydroxylylenDiisocyanat, Dicyclohexyl-4,4-diisocyanat, 1-Methyl-2,4-diisocyanatocyclohexan, 1-Methyl-2,6-diisocyanatocyclohexan, bis-(4-isocyanatocyclohexyl)methan, 1,4-diisocyanatocyclohexan und 1, 3-diisocyanatocyclohexan besteht.

8. Polyurethanharz-Zusammensetzung nach Anspruch 1, wobei das zweite Urethanharz gebildet wird, indem ausgehend von 1 Gewichtsteil des Polyetherpolyols, 0,5 bis 1,5 Gewichtsteilen der Verbindung auf Basis von Aminoalkoxysilan, 0,5 bis 4,5 Gewichtsteilen des aliphatischen Polyisocyanats und 3 bis 10 Gewichtsteilen des Biuret-Körpers, welcher an Isocyanat gebunden ist, eine Reaktion durchgeführt wird.

9. Polyurethanharz-Zusammensetzung nach Anspruch 1,
wobei das erste Urethanharz und das zweite Urethanharz in einem Gewichtsverhältnis von 10:1 bis 10:3 enthalten sind.

10. Polyurethanharz-Zusammensetzung nach Anspruch 1, wobei der Weichmacher einen Weichmacher auf Phthalatbasis, einen Weichmacher auf Phosphatbasis oder eine Mischung davon umfasst.

## Revendications

1. Composition de résine de polyuréthane comprenant :
une première résine d'uréthane ;
une seconde résine d'uréthane obtenue par réaction d'un polyol de polyéther, d'un composé à base d'aminoalcoxy silane, d'un polyisocyanate aliphatique, et d'un corps de biuret lié à de l'isocyanate ; et
un plastifiant.

2. Composition de résine de polyuréthane selon la revendication 1, dans laquelle le polyol de polyéther comprend un ou plusieurs éléments choisis dans le groupe constitué de polyéthylène glycol, polypropylène glycol, polybutylène glycol, et polytétraméthylène glycol.

3. Composition de résine de polyuréthane selon la revendication 1, dans laquelle le composé à base d'aminoalcoxy silane comprend un ou plusieurs composés choisis dans le groupe constitué de bis(trialcoxysilylpropyl)amine, N-2-(aminoéthyl)-3-aminopropylméthyldiméthoxysilane, N-2-(aminoéthyl)-3-aminopropyltriméthoxysilane, 3-aminopropyltriméthoxysilane, 3-aminopropyltriéthoxysilane, N-phényl-3-aminopropyltriméthoxysilane, N-phényl-gamma-aminopropyltriméthoxysilane, et 3-aminopropyltriéthoxysilane.

4. Composition de résine de polyuréthane selon la revendication 3, dans laquelle le composé à base d'aminoalcoxy silane comprend un ou plusieurs composés choisis dans le groupe constitué de bis(triméthoxysilylpropyl)amine, bis(triéthoxysilylpropyl)amine, et bis(tripropoxysilylpropyl)amine.

5. Composition de résine de polyuréthane selon la revendication 1, dans laquelle le polyisocyanate aliphatique est un composé représenté par la Formule 1 ci-dessous : 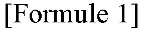 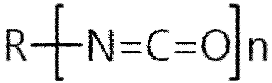 dans laquelle R est un hydrocarbure aliphatique en C₁₋₂₀ substitué ou non substitué, un hydrocarbure aromatique en C₆₋₂₀ substitué ou non substitué, un cycle hydrocarboné aliphatique en C₃₋₂₀ substitué ou non substitué, ou une combinaison de ceux-ci, l'hydrocarbure aliphatique et le cycle hydrocarboné aliphatique comprennent ou ne comprennent pas un atome d'azote, comprennent ou ne comprennent pas un groupe cétone ou un groupe éther, et n est un entier compris entre 1 et 4.

6. Composition de résine de polyuréthane selon la revendication 5, dans laquelle le composé de la Formule 1 ci-dessus comprend un ou plusieurs composés choisis dans le groupe constitué d'isocyanate d'éthyle, isocyanate de propyle, isocyanate de butyle, isocyanate de pentyle, isocyanate d'hexyle, isocyanate d'heptyle, isocyanate d'octyle, isocyanate de nonyle, isocyanate de décyle, isocyanate d'undécyle, isocyanate de dodécyle, isocyanate de tridécyle, isocyanate de tétradécyle, isocyanate de pentadécyle, isocyanate d'hexadécyle, isocyanate d'heptadécyle, isocyanate d'octadécyle, diisocyanate de diméthylène, diisocyanate de triméthylène, diisocyanate de tétraméthylène, diisocyanate de pentaméthylène, diisocyanate d'hexaméthylène, diisocyanate d'heptaméthylène, diisocyanate d'octaméthylène, diisocyanate de nonaméthylène, diisocyanate de décaméthylène, diisocyanate d'undécaméthylène, diisocyanate de dodécaméthylène, diisocyanate de tridécadécaméthylène, diisocyanate de tétradécaméthylène, diisocyanate de pentadécaméthylène, diisocyanate d'hexadécaméthylène, diisocyanate d'heptadécaméthylène, diisocyanate d'octadécaméthylène, diisocyanate de 1,2-phénylène, diisocyanate de 1,3-phénylène, diisocyanate de 1,4-phénylène, diisocyanate d'o-xylylène, diisocyanate de m-xylylène, diisocyanate de p-xylylène, diisocyanate de 2,4-toluène, diisocyanate de 2,5-toluène, diisocyanate de 2,6-toluène, poly(diisocyanate d'hexaméthylène), disisocyanate d'isophorone, méthacrylate de 2-isocyanatoéthyle, diisocyanate de trans-1,4-cyclohexylène, diisocyanate de 3,3'-diméthoxy-4,4'-biphénylène, 1,3-bis(1-isocyanato-1-méthyléthyl)benzène, 3,3'-diméthyldiphénylméthane-4,4'-diisocyanate, 4,4'-méthylènebis (isocyanate de phényle) et 2,4,6-trioxotriazine-1,3,5(2H,4H,6H)-triyl)tris(hexaméthylène)isocyanate.

7. Composition de résine de polyuréthane selon la revendication 1, dans laquelle l'isocyanate lié au corps du biuret comprend un ou plusieurs éléments choisis dans le groupe constitué de diisocyanate d'hexaméthylène, cyclopentylène-1,3-diisocyanate, cyclohexylène-1,2-diisocyanate, diisocyanate d'hexahydroxylylène, dicyclohexyl-4,4-diisocyanate, 1-méthyl-2,4-diisocyanatocyclohexane, 1-méthyl-2,6-diisocyanatocyclohexane, bis(4-isocyanatocyclohexyl)méthane, 1,4-diisocyanatocyclohexane, et 1,3-diisocyanatocyclohexane.

8. Composition de résine de polyuréthane selon la revendication 1, dans laquelle la seconde résine d'uréthane est formée par réaction, sur la base de 1 partie en poids du polyol polyéther, de 0,5 à 1,5 partie en poids du composé à base d'aminoalcoxy silane, de 0,5 à 4,5 parties en poids du polyisocyanate aliphatique, et de 3 à 10 parties en poids du corps de biuret lié à l'isocyanate.

9. Composition de résine de polyuréthane selon la revendication 1, dans laquelle la première résine d'uréthane et la seconde résine d'uréthane sont incorporées selon un rapport de poids de 10:1 à 10:3.

10. Composition de résine de polyuréthane selon la revendication 1, dans laquelle le plastifiant comprend un plastifiant à base de phtalate, un plastifiant à base de phosphate, ou un mélange de ceux-ci.
